# EUROPEAN PATENT APPLICATION

(11) **EP 2 709 255 A1**
(43) Date of publication of application: **19.03.2014**
(21) Application number: 11865620.6
(22) Date of filing: 13.05.2011
(51) Int. Cl.: H02M 3/28

(54) **VEHICLE POWER SOURCE SYSTEM**

(71) Applicant: TOYOTA JIDOSHA KABUSHIKI KAISHA, Toyota-shi, Aichi-ken, 471-8571 (JP)
(72) Inventor: YAMAMOTO, Akira, Toyota-shi, Aichi-ken 471-8571 (JP)
(74) Representative: TBK
(86) International application number: PCT/JP2011/061018
(87) International publication number: WO 2012/157036

(57) **Abstract**

When an earth faulting has occurred in a driving device for driving motor (M1), an electric potential of a vehicle earth is changed. Therefore, in a DC/DC converter (100), a high-voltage noise intrudes a high-voltage detector (140) through a connection node of a Y capacitor constituted by a pair of capacitors (C1, C2). When the earth faulting of the driving device has occurred, the control device lowers the direct-current side voltage of the inverter in the high-voltage system to reduce the quantity of the high-voltage noise intruding the high-voltage detector (140).

## Description

### TECHNICAL FIELD

The present invention relates to a power supply system for a vehicle, and more particularly to a power supply system for a vehicle including a driving device receiving electric power from an onboard power storage device to generate vehicle driving power, and an auxiliary machine receiving electric power from the onboard power storage device to operate.

### BACKGROUND ART

Conventionally, an electrically powered vehicle such as an electric vehicle, a hybrid vehicle, and a fuel cell vehicle, configured to allow generation of vehicle driving power by an electric motor, employs a configuration equipped with two types of power storage devices including a power storage device (for example, a main battery) storing electric power for driving the electric motor, and a power storage device (for example, an auxiliary machine battery) driving a low-voltage auxiliary machine. This is because there is a significant difference between an output voltage suitable for driving a traction motor and a rated voltage for an auxiliary machine such as a headlight and air conditioning equipment or for control equipment such as an electric control unit (ECU).

In such a configuration, as disclosed in Japanese Patent Laying-Open No. 2010-104106 (PTD1), generally, a voltage converter (DC/DC converter) lowers an output voltage of a main battery, and then an output voltage of the DC/DC converter is supplied to an auxiliary machine and an auxiliary machine battery.

### CITATION LIST

### PATENT DOCUMENT

PTD1: Japanese Patent Laying-Open No. 2010-104106
PTD2: Japanese Patent Laying-Open No. 2007-209158
PTD3: Japanese Patent Laying-Open No. 2006-246653
PTD4: Japanese Patent Laying-Open No. 2005-130698

### SUMMARY OF INVENTION

### TECHNICAL PROBLEM

In the electrically powered vehicle described above, when an earth faulting occurs in a high-voltage system including a main battery and a booster circuit boosting the main battery, an electric potential of a vehicle earth is changed due to a current leakage from the high-voltage system. In a conventional electrically powered vehicle, to avoid a malfunction due to the change in the electric potential of the vehicle earth, it has been considered to forcibly stop the DC/DC converter by performing an operation stop control of stopping operation of the DC/DC converter when a leakage from the high-voltage system occurs.

However, since stopping the operation of the DC/DC converter shuts off a power supply path to an auxiliary machine and an auxiliary machine battery, it is likely that the auxiliary machine cannot be operated normally.

Therefore, the present invention was made to solve such a problem, and its object is to provide a power supply system for a vehicle capable of supplying electric power stably to an auxiliary machine even when an earth faulting has occurred in a driving device.

### SOLUTION TO PROBLEM

According to one aspect of the present invention, a power supply system for a vehicle includes a power storage device, a driving device receiving electric power from the power storage device to generate vehicle driving power, and an auxiliary machine receiving electric power from the power storage device to operate. The power supply system for a vehicle includes a pair of capacitors connected in series between terminals of the power storage device and having a connection node connected to a vehicle earth, a voltage converter lowering an output voltage of the pair of capacitors and supplying the voltage to the auxiliary machine, a voltage detector detecting the output voltage of the pair of capacitors, a leakage detector detecting an earth faulting of the driving device, and a control device controlling the power supply system so as to suppress a change in an electric potential of the vehicle earth when the leakage detector detects an earth faulting of the driving device.

Preferably, the driving device includes an inverter driving an electric motor for driving a vehicle and a converter variably controlling a direct-current side voltage of the inverter. When the leakage detector detects an earth faulting of the driving device, the control device controls the converter to lower the direct-current side voltage of the inverter from a first value to a second value.

Preferably, the control device includes a voltage command value setting unit setting a voltage command value of the converter in accordance with an operation state of the electric motor, and a voltage conversion controller controlling a voltage conversion operation of the converter so that the direct-current side voltage of the inverter matches with the voltage command value. When the leakage detector detects an earth faulting of the driving device, the voltage command value setting unit lowers the voltage command value from the first value to the second value.

Preferably, the voltage command value setting unit lowers the voltage command value from the first value to the second value gradually.

Preferably, each of the pair of capacitors is a capacitor of a variable capacitance type. When an earth faulting of the driving device is detected with use of a detection value of the leakage detector, the control device lowers a capacitance of the pair of capacitors from a first value to a second value.

### ADVANTAGEOUS EFFECTS OF INVENTION

According to the present invention, in a power supply system for a vehicle including a driving device receiving electric power from an onboard power storage device to generate vehicle driving power and an auxiliary machine receiving electric power from the onboard power storage device to operate, electric power can be stably supplied to the auxiliary machine even when an earth faulting has occurred in the driving device.

### BRIEF DESCRIPTION OF DRAWINGS

Fig. 1 represents a schematic configuration of an electrically powered vehicle provided with a power supply system in accordance with an embodiment of the present invention.
Fig. 2 represents a circuit diagram for describing a detailed configuration of the DC/DC converter shown in Fig. 1.
Fig. 3 represents a schematic diagram for describing a state of a low-voltage system in the case where an earth faulting has occurred in the high-voltage system.
Fig 4 represents an example of a waveform of a pulse signal outputted from a high-voltage detector in the case where an earth faulting has occurred in the high-voltage system.
Fig. 5 represents a timing chart for describing an operation of the DC/DC converter in the case where a short-circuit faulting has occurred in the high-voltage system of the conventional power supply system.
Fig. 6 represents a timing chart for describing an operation of the power supply system according to the first embodiment of the present invention in the case where an earth faulting has occurred in the high-voltage system.
Fig. 7 represents a block diagram showing a control structure of the control device in accordance with the first embodiment.
Fig. 8 represents a timing chart for describing an operation of the power supply system in accordance with a modified example of the first embodiment of the present invention in the case where an earth faulting has occurred in the high-voltage system.
Fig. 9 represents a circuit diagram for describing a configuration of the DC/DC converter provided in the power supply system in accordance with the second embodiment of the present invention.
Fig. 10 represents a relationship between a capacitance of a Y capacitor and a quantity of a high-voltage noise intruding from the Y capacitor to the high-voltage detector.

### DESCRIPTION OF EMBODIMENTS

Hereinafter, embodiments of the present invention will be described in detail with reference to the drawings. It should be noted that the same reference signs denote the same or corresponding parts.

### [First Embodiment]

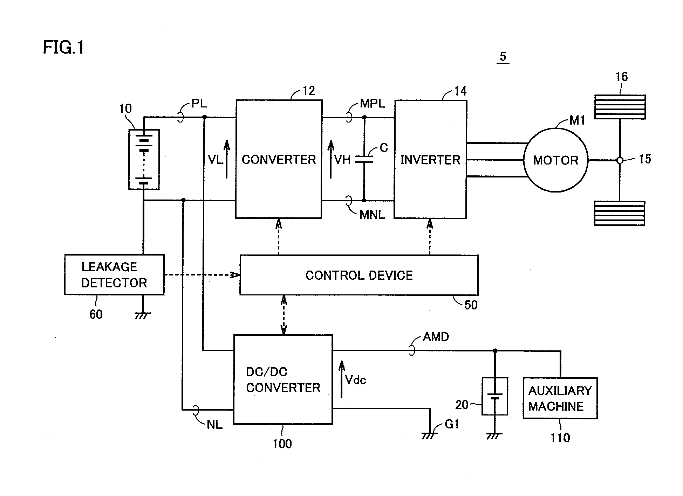

Fig. 1 represents a schematic configuration of an electrically powered vehicle provided with a power supply system in accordance with a first embodiment of the present invention.

With reference to Fig. 1, an electrically powered vehicle 5 includes a main battery 10, a converter 12, an inverter 14, a motor M1 for driving a vehicle, a power transmission gear 15, drive wheels 16, a control device 50, and a leakage detector 60. According to the configuration of Fig. 1, parts other than motor M1, power transmission gear 15, and drive wheels 16 constitute the power supply system of electrically powered vehicle 5.

Main battery 10 is illustrated as an example of a "power storage device" storing electric power for driving motor M1. Main battery 10 is typically configured by a secondary battery such as a lithium ion battery and a nickel metal hydride battery. Alternatively, the power storage device may be configured by an electric double layer capacitor, or by a combination of a secondary battery and a capacitor.

Converter 12 is configured to perform a bidirectional direct-voltage conversion between a voltage VL across a positive line PL and a negative line NL (in other words, an input/output voltage of main battery 10) and a voltage VH across a positive bus line MPL and a negative bus line MNL (in other words, the direct-current side voltage of inverter 14). In other words, input/output voltage VL of main battery 10 and direct-current voltage VH across positive bus line MPL and negative bus line MNL are boosted or lowered in a directional manner. The voltage boosting and lowering operations in converter 12 are controlled respectively in response to switching commands given by control device 50. Further, a smoothing capacitor C is connected between positive bus line MPL and negative bus line MNL.

Inverter 14 performs a bidirectional electric power conversion between direct-current power across positive bus line MPL and negative bus line MNL and alternate-current power inputted and outputted to and from motor M1. Specifically, inverter 14 converts direct-current voltage VH across positive bus line MPL and negative bus line MNL into a three-phase alternate-current voltage in response to the switching commands given by control device 50, and supplies the voltage to motor M1. Output torque of motor M1 is controlled by this three-phase alternate-current voltage.

The output torque of motor M1 is transmitted to drive wheels 16 through power transmission gear 15 configured by a reducer and a power-split mechanism to allow running of electrically powered vehicle 5. On the other hand, at the time of regenerative braking of electrically powered vehicle 5, motor M1 generates alternate-current power along with reduction in the speed of drive wheels 16. In this stage, inverter 14 converts the alternate-current electric power generated by motor M1 into the direct-current electric power in response to the switching commands given by control device 50, and supplies the electric power to positive bus line MPL and negative bus line MNL. This direct-current electric power is further supplied to main battery 10 by converter 12. Thus, main battery 10 is charged at the time of reduction in speed and at the time of running down a slope.

Further, in a hybrid vehicle provided with an engine (not illustrated) in addition to motor M1, required vehicle driving power for electrically powered vehicle 5 is generated by allowing this engine and motor M1 to operate cooperatively. At this stage, main battery 10 can be charged using electric power generated by rotation of the engine. In other words, electrically powered vehicle 5 collectively represents a vehicle provided with a traction motor, and includes a hybrid vehicle generating vehicle driving power with use of an engine and an electric motor, an electric automobile provided with no engine, a fuel vehicle, and the like.

Leakage detector 60 is connected between a negative electrode side (in other words, negative line NL) of main battery 10 and a ground node (vehicle earth) connected to a vehicle body. Leakage detector 60 detects a leakage in the main battery system (hereinafter, referred to as a high-voltage system) described above. Leakage detector 60 outputs a signal DEL indicating occurrence of a leakage in the high-voltage system to control device 50.

Control device 50 is typically configured by an electronic control unit (ECU) mainly including a CPU (Central Processing Unit), memory regions such as a RAM (Random Access Memory) and a ROM (Read Only Memory), and an input/output interface. Control device 50 executes a control associated with running of a vehicle and charging/discharging of main battery 10 by allowing the CPU to read a program stored in advance in the ROM or the like and execute the same. At least a part of the ECU may be configured to execute predetermined numerical and logical operation processes with use of hardware such as an electronic circuit.

Electrically powered vehicle 5 further includes, in addition to the high-voltage system described above, an auxiliary machine power supply system (hereinafter, referred to as a low-voltage system). While the high-voltage system is insulated from the vehicle earth, the low-voltage system is operated with the vehicle earth as a reference.

Specifically, electrically powered vehicle 5 further includes an auxiliary machine battery 20, a DC/DC converter 100, and an auxiliary machine load 110. Auxiliary machine battery 20 is configured by, for example, a lead battery. The voltage of auxiliary machine battery 20 is lower than the output voltage of main battery 10 and is about 12V for example. The electric power is supplied from auxiliary machine battery 20 to auxiliary machine load 110.

DC/DC converter 100 lowers voltage VL (output voltage of main battery 10) between positive line PL and negative line NL and outputs the voltage to power supply line AMD In other words, the output voltage Vdc of DC/DC converter 100 corresponds to the direct-current voltage across ground node G1 and power supply line AMD

Auxiliary machine load 110 receives a supply of the voltage from power supply line AMD or auxiliary machine battery 20 to operate. Auxiliary machine load 110 includes audio equipment, navigation equipment, and lighting equipment (a hazard lamp, an interior lamp, a head lamp, and the like). Further, auxiliary machine load 110 includes running system loads, such as an electric power steering mechanism, an electric oil pump, an electrically controlled small motor, and the like, directly used for running of a vehicle. Further, control device 50 (ECU) is also operated with use of the electric power supplied from auxiliary machine battery 20 or power supply line AMD Auxiliary machine load 110 typically represents these auxiliary machine loads operated with use of the voltage supplied from power supply line AMD or auxiliary machine battery 20.

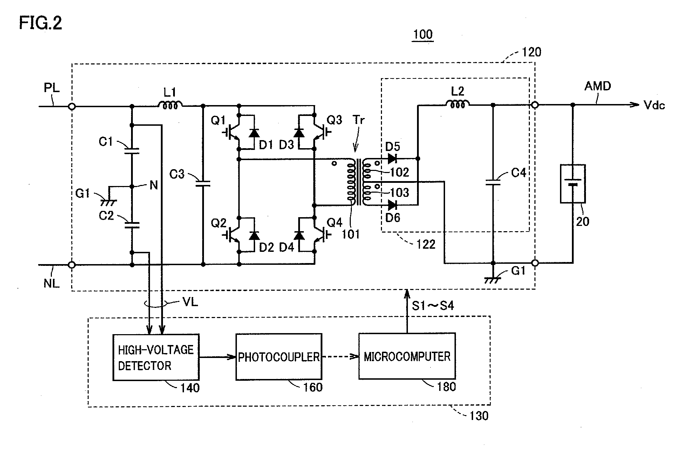

Fig. 2 represents a circuit diagram for describing a detailed configuration of DC/DC converter 100 shown in Fig. 1.

Referring to Fig. 2, DC/DC converter 100 is constituted by a converter unit 120, and a controller 130 controlling converter unit 120.

Converter unit 120 includes an inductor L1 and capacitors C1, C2, C3, power semiconductor switching elements Q1-Q4 constituting a full-bridge circuit, a transformer Tr, and a conversion circuit (AC/DC) 122. Anti-parallel diodes D1-D4 are provided to corresponding switching elements Q1-Q4, respectively.

Capacitors C1 and C2 are connected in series between positive line PL and negative line NL, and a connection node (node N) thereof is connected to ground node G1. Capacitor C1 and capacitor C2 have the equal capacitance. A series-connected body of the pair of capacitors C1, C2 constitutes a Y capacitor. The Y capacitor and inductor L1 with capacitor C3 constitute an LC filter. The LC filter suppresses a change in input voltage VL (the voltage across positive line PL and negative line NL) due to superimposition of a common-mode current with respect to positive line PL and negative line NL.

Fig. 2 illustrates transistors as power semiconductor switching elements Q1-Q4 (hereinafter, simply referred to as "switching element"). The ON/OFF operations of switching elements Q1-Q4 are controlled in response to signals S1-S4 from controller 130. The full-bridge circuit converts voltage VL from main battery 10 into an alternate-current voltage and outputs the voltage to a primary side coil 101 of transformer Tr. In other words, an amplitude, a frequency, and a phase of the alternate-current voltage generated in primary side coil 101 can be controlled by switching elements Q1-Q4.

Transformer Tr includes primary side coil 101, secondary side coils 102, 103, and an iron core electromagnetically coupling primary side coil 101 and secondary side coils 102, 103.

In secondary side coils 102 and 103, the alternate-current voltage in accordance with the voltage of primary side coil 101 is generated respectively. An amplitude of the alternate-current voltage generated in secondary side coil 102 is determined in accordance with the alternate-current voltage of primary side coil 101 and a turn ratio between primary side coil 101 and secondary side coil 102. Similarly, an amplitude of the alternate-current voltage generated in secondary side coil 103 is determined in accordance with the alternate-current voltage of primary side coil 101 and a turn ratio between primary side coil 101 and secondary side coil 103.

One end of secondary side coil 102 is connected to power supply line AMD through conversion circuit 122. The other end of secondary side coil 102 is connected to ground node G1. One end of secondary side coil 103 is connected to ground node G1, similarly to the other end of secondary side coil 102. The other end of secondary side coil 103 is connected to power supply line AMD through conversion circuit 122, similarly to the one end of secondary side coil 102. The alternate-current voltage is transmitted from primary side coil 101 to secondary side coils 102, 103 so that the one end of secondary side coil 102 and the one end of secondary side coil 103 have the same phase, and the other end of secondary side coil 102 and the other end of secondary side coil 103 have the same phase.

Conversion circuit 122 converts the alternate-current voltage transmitted to secondary side coils 102, 103 into the direct-current voltage and outputs the voltage across power supply line AMD and ground node G1. The direct-current voltage converted by conversion circuit 122 corresponds to output voltage Vdc of DC/DC converter 100.

Conversion circuit 122 has diodes D5, D6, inductor L2, and capacitor C4. Diode D5 rectifies the alternate-current voltage generated in secondary side coil 102. Diode D6 rectifies the alternate-current voltage generated in secondary side coil 103. The voltage rectified by diodes D5, D6 is converted into the direct-current voltage by the LC filter constituted by inductor L2 and capacitor C4.

In the configuration described above, output voltage Vdc of DC/DC converter 100 can be controlled in accordance with an amplitude of the alternate-current voltage of primary side coil 101 1 generated by the full-bridge circuit on the primary side. Therefore, controller 130 controls ON/OFF (duty) of switching elements Q1-Q4 based on comparison between a voltage command value as a target value of output voltage Vdc of DC/DC converter 100 and the voltage of power supply line AMD

Specifically, controller 130 includes high-voltage detector 140, a photocoupler 160, and a microcomputer 180.

High-voltage detector 140 detects voltage VL between terminals of the Y capacitor constituted by the pair of capacitors C1 and C2 (in other words, the voltage between positive line PL and negative line NL), and outputs the detection result to microcomputer 180 through photocoupler 160.

Specifically, high-voltage detector 140 includes a PWM (Pulse Width Modulation) circuit (not illustrated). The PWM circuit is constituted by an oscillation circuit oscillating at a constant frequency, and a comparator comparing a triangular wave signal generated by the oscillation circuit and an amplitude of voltage VL. The PWM circuit modulates the amplitude of voltage VL to obtain a pulse width with a constant amplitude. High-voltage detector 140 outputs the pulse signal modulated by the PWM circuit to photocoupler 160.

Photocoupler 160 constitutes an insulating circuit providing insulation between the primary side and the secondary side of transformer Tr. Photocoupler 160 is constituted by a light-emitting diode as a light-emitting element, and a photo-transistor as a light receiving element. When the light-emitting diode emits a light beam in response to the pulse signal from high-voltage detector 140, the photo-transistor is turned ON/OFF based on the light signal from the light-emitting diode.

Microcomputer 180 acquires a detection value of voltage VL based on the ON/OFF (duty) of the photo-transistor of photocoupler 160. Further, microcomputer 180 acquires a detection value of output voltage Vdc from a low-voltage detector (not illustrated) provided between power supply line AMD and ground node G1. Microcomputer 180 subtracts a detection value of voltage Vdc from the voltage command value, and executes a control operation (for example, proportional-integral control) for matching voltage Vdc with the voltage command value. After setting a duty command value based on the calculation result, microcomputer 180 generates signals S1-S4 for controlling the ON/OFF of switching elements Q1-Q4 in accordance with the set duty command values and outputs the signals to converter unit 120.

Here, in the switching control for switching elements Q1-Q4, microcomputer 180 sets an upper limit value for the duty command values of switching elements Q1-Q4 (hereinafter, referred to as "duty command upper limit value"). The duty command upper limit value is set to avoid application of the overvoltage to the elements (switching element, diode, and the like) provided in DC/DC converter 100. The duty command upper limit value takes a variable value in accordance with voltage VL inputted to DC/DC converter 100.

Specifically, the duty command upper limit value is set based on a voltage range of voltage VL across positive line PL and negative line NL. The voltage range of voltage VL is determined in accordance with an output voltage range of main battery 10. The output voltage of main battery 10 is changed in accordance with transfer of electric power between main battery 10 and motor M1 in the high-voltage system, in other words, charging/discharging of main battery 10. The duty command upper limit value is variably set in accordance with voltage VL (in other words, the output voltage of main battery 10) so that the voltage applied to elements inside DC/DC converter 100 does not exceed a breakdown voltage of the element.

As described above, by controlling the duty of switching elements Q1-Q4 within the range not exceeding the duty command upper limit value set in advance, DC/DC converter 100 can supply the output voltage to auxiliary machine battery 20 and auxiliary machine load 110, while preventing the damage to the elements provided therein.

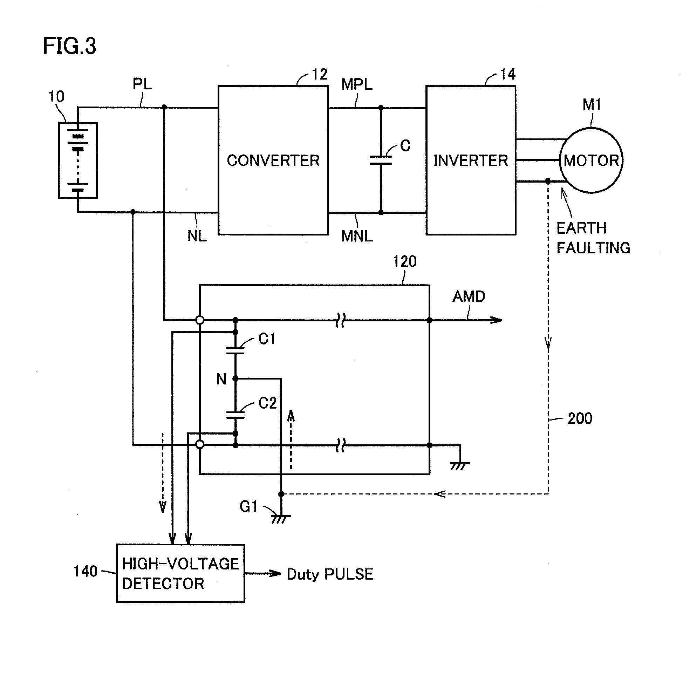

However, in electrically powered vehicle 5 shown in Fig. 1, when an earth faulting of the high-voltage system has occurred, for example, when an electric power cable supplying electric power to motor M1 or inverter 14 caused a short circuit with respect to the vehicle earth, an electrical leakage path is formed between the high-voltage system and the vehicle earth (ground node G1). Therefore, an electric potential of ground node G1 is changed. In this case, in the low-voltage system operated with ground node G1 as a reference, as shown in Fig. 3, a defect that a noise of high-voltage (hereinafter, referred to as high-voltage noise) intrudes high-voltage detector 140 through the connection node (node N) connected to ground node G1 may occur in DC/DC converter 100.

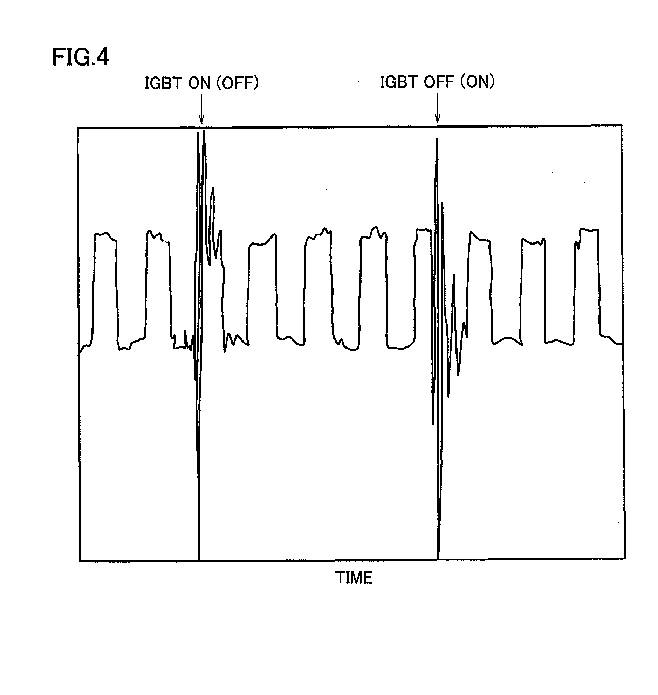

Fig. 4 represents one example of a waveform of a pulse signal outputted from high-voltage detector 140 when an earth faulting has occurred in the high-voltage system. Fig. 4 assumes the case where an earth faulting has occurred in the electric power cable provided between inverter 14 and motor M1.

Referring to Fig. 4, when the high-voltage system is in a normal state, a pulse signal of a duty corresponding to a detection value of voltage VL is outputted from high-voltage detector 140. On the other hand, when an earth faulting has occurred in the electric power cable, the high-voltage noise intrudes high-voltage detector 140 in accordance with a change in an electric potential of ground node G1. The high-voltage noise occurs at each timing of turning on or turning off the switching element included in inverter 14. It becomes difficult for high-voltage detector 140 to accurately detect the detection value of voltage VL due to an effect of the high-voltage noise. In this case, a communication error of not being able to transmit the detection value of voltage VL from high-voltage detector 140 to microcomputer 180 may occur.

When a communication error occurs in high-voltage detector 140 as described above, converter unit 120 is controlled based on an incorrect voltage detection value. Thus, DC/DC converter 100 is likely to output excessively high-voltage. To avoid such a defect, in a conventional power supply system, when a communication error occurs in high-voltage detector 140, an operation stop control for DC/DC converter 100 is performed by operation of an internal protection function for protecting an auxiliary machine load and an auxiliary machine battery connected to an internal element of DC/DC converter or a DC/DC converter. This forcibly stopped the output of the voltage of DC/DC converter 100.

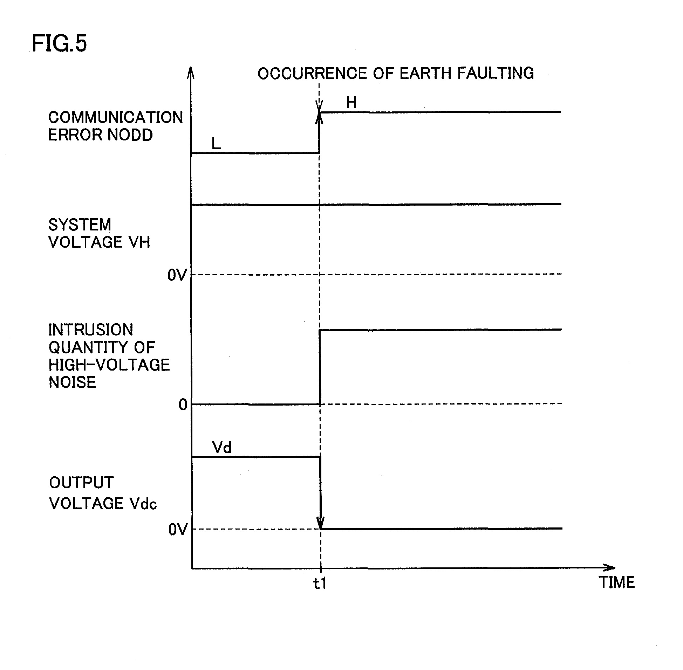

Fig. 5 represents a timing chart for describing an operation of DC/DC converter 100 in the case where a short-circuit faulting has occurred in the high-voltage system of the conventional power supply system.

Referring to Fig. 5, when occurrence of the communication error in high-voltage detector 140 at the time t1 is determined, controller 130 of DC/DC converter 100 lowers the duty command value of switching elements Q1-Q4 of the full-bridge circuit on the primary side to 0 (%). This causes all of switching elements Q1-Q4 to be turned OFF. Then, output voltage Vdc of DC/DC converter 100 is lowered to approximately 0V. Further, controller 130 activates a signal NODD indicating generation of the communication error to the H (logic high) level and outputs the signal to control device 50.

Thus, after the time t1 where an output of DC/DC converter 100 has been stopped, auxiliary machine battery 20 cannot be charged with use of output voltage Vdc. Therefore, discharging of auxiliary machine battery 20 with respect to power supply line AMD is promoted. Then, when the output voltage of auxiliary machine battery 20 is lowered due to this discharging, interference is likely to occur in the operation of auxiliary machine load 110.

Here, to solve the problem described above, any countermeasures should be desirably taken to avoid intrusion of the high-voltage noise into high-voltage detector 140. One conceivable example of such countermeasures is to remove the Y capacitor forming an entry path for the high-voltage noise at the time of earth faulting from DC/DC converter 100. However, when the stray capacitance of the high-voltage system and the vehicle earth is small, it is concerned that removing the Y capacitor causes a negative effect with respect to onboard electronic equipment including control device 50 due to increase in so-called radio noise.

Alternatively, reinforcing a filter provided inside DC/DC converter 100 is conceivable. However, while intrusion of the high-voltage noise can be shut down by reinforcing the filter, a detection sensitivity of high-voltage detector 140 is likely to be deteriorated on the contrary.

In light of the above, in the power supply system according to the present embodiment, the high-voltage system is controlled so that a quantity of the high-voltage noise intruding high-voltage detector 140 becomes small when an earth faulting has occurred in the high-voltage system. Specifically, lowering the direct-current side voltage of inverter 14 (in other words, voltage VH between positive bus line MPL and negative bus line MNL) suppresses the change in an electric potential of the vehicle earth. This reduces the quantity of the high-voltage noise intruding high-voltage detector 140 to a level of not generating a communication error in high-voltage detector 140. In the following, voltage VH across positive bus line MPL and negative bus line MNL corresponding to the direct-current side voltage of inverter 14 will also be referred to as system voltage VH

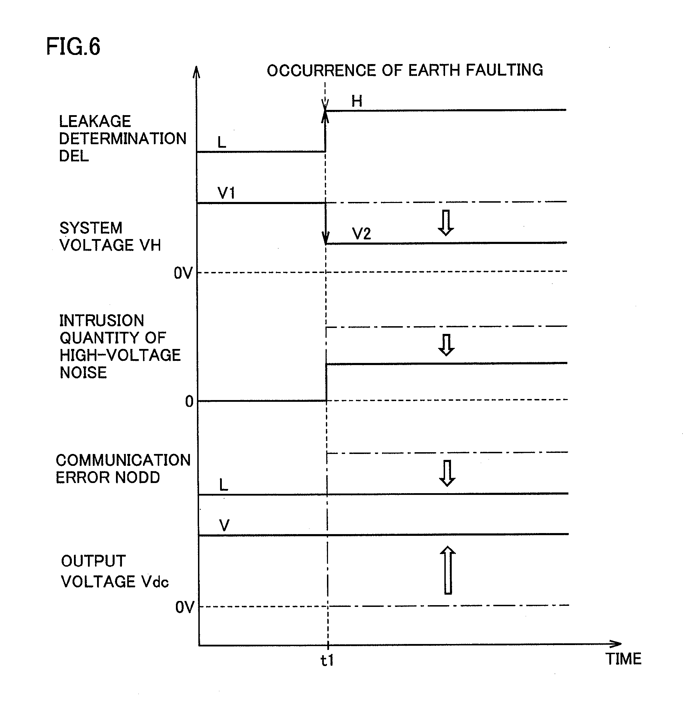

Fig. 6 represents a timing chart for describing an operation of the power supply system in accordance with the first embodiment of the present invention in the case where an earth faulting has occurred in the high-voltage system.

Referring to Fig. 6, until the time t1, DC/DC converter 100 is operated, and control device 50 of the high-voltage system gives a command of a normal operation. In this stage, at the time t1, when occurrence of the earth faulting in the high-voltage system is detected in accordance with signal DEL from leakage detector 60, control device 50 lowers system voltage VH from a predetermined voltage V1 to a predetermined voltage V2. Predetermined voltage V1 up to the time t1 is system voltage VH set in accordance with an operation point (rotational speed and torque) of motor M1, following the control structure described later. On the other hand, predetermined voltage V2 is system voltage VH set so that a quantity of the high-voltage noise intruding high-voltage detector 140 becomes lower than a predetermined allowable quantity based on a relationship between system voltage VH and a quantity of the high-voltage noise acquired in advance by experiments and the like.

As described above, while the high-voltage noise is generated at each timing of turning ON or turning OFF the switching element included in inverter 14, a quantity of the high-voltage noise increases as a change in the electric potential of ground node G1 becomes greater in accordance with an increase in system voltage VH Therefore, control device 50 lowers system voltage VH to reduce a quantity of the high-voltage noise.

Accordingly, in high-voltage detector 140, since a quantity of the intruding high-voltage noise is reduced, a communication error does not occur after the time t1, and signal NODD indicating occurrence of the communication error is maintained at the L level. Consequently, the operation stop control for DC/DC converter 100 is not performed, and operation of DC/DC converter 100 continues after the time t1.

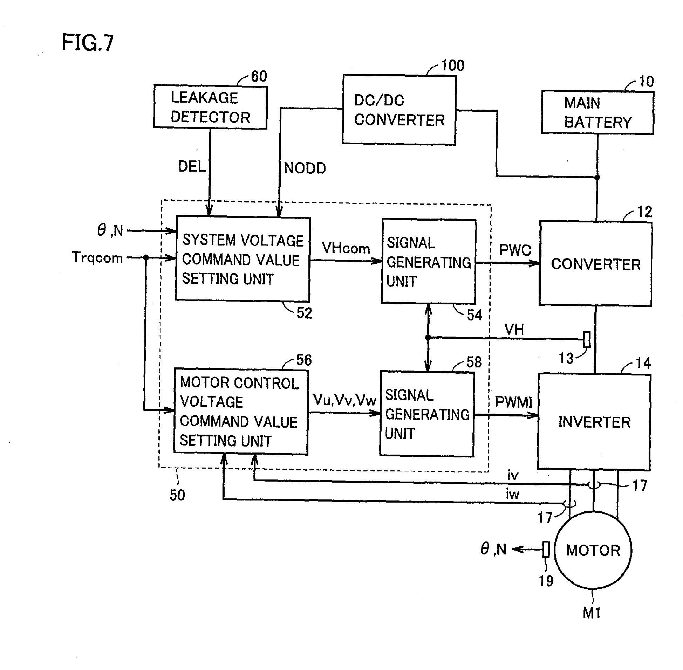

Next, a control performed by control device 50 with respect to converter 12 and inverter 14 will be described. Fig. 7 represents a block diagram showing the control structure of control device 50 in accordance with the first embodiment. Each functional block shown in Fig. 7 is typically achieved by control device 50 executing a program stored in advance, and a part of or all of its function may be provided as dedicated hardware.

Referring to Fig. 7, control device 50 includes a system voltage command value setting unit 52, a signal generating unit 54, a motor control voltage command value setting unit 56, and a signal generating unit 58.

A voltage sensor 13 detects the voltage at opposite ends of smoothing capacitor C (Fig. 1), in other words, system voltage VH, and outputs detection value VH to system voltage command value setting unit 52 and motor control voltage command value setting unit 56.

A current sensor 17 detects a motor current flowing into motor M1, and outputs the detection value to motor control voltage command value setting unit 56. Since the sum of instantaneous values of the three-phase current iu, iv, iw is zero, it is sufficient to arrange current sensor 17 so as to detect current for two phases (for example, V-phase current iv and W-phase current iw).

A rotational angle sensor (resolver) 19 detects a rotational angle θ of the rotor of motor M1 and the rotation number (the motor rotation number) N per unit time of motor M1, and outputs a signal indicating the detection result to system voltage command value setting unit 52.

System voltage command value setting unit 52 calculates a system voltage command value VHcom based on a command operation point of motor M1 (a torque command value Trqcom and motor rotation number N). Torque command value Trqcom is calculated based on a detection value of an accelerator opening degree indicating a quantity of operation with respect to an accelerator pedal.

Signal generating unit 54 generates a switching control signal PWC for actually controlling ON/OFF of the switching element of converter 12 in accordance with system voltage command value VHcom. Converter 12 performs switching operation in accordance with switching control signal PWC, so that system voltage VH takes the voltage commanded by system voltage command value VHcom.

Motor control voltage command value setting unit 56 calculates each of phase voltage command values Vu, Vv, Vw as the quantity of operation of the voltage applied to each of the phase coils of motor M1 based on a command operation point of motor M1 (torque command value Trqcom and motor rotation number N), motor current iv, iw, and system voltage VH, and outputs the calculation result to signal generating unit 58.

Signal generating unit 58 generates a switching control signal PWM for actually controlling ON/OFF of switching elements of inverter 14 in accordance with each of phase voltage command values Vu, Vv, Vw. Inverter 14 performs switching operation in accordance with switching control signal PWM, so that the voltage commanded by each of phase voltage command values Vu, Vv, Vw is applied to each of the phase coils of motor M1. Accordingly, the output torque of motor M1 takes a value corresponding to torque command value Trqcom.

Here, when a short-circuit faulting has occurred in motor M1 or inverter 14, leakage detector 60 outputs signal DEL indicating occurrence of a leakage in the high-voltage system to system voltage command value setting unit 52. When system voltage command value setting unit 52 receives signal DEL indicating occurrence of the leakage in the high-voltage system, it lowers system voltage command value VHcom from predetermined voltage V1 calculated based on the command operation point of motor M1 to predetermined voltage V2.

Signal generating unit 54 performs a feedback control with respect to system voltage VH, and generates switching control signal PWC so that system voltage VH takes system voltage command value VHcom (= predetermined voltage V2). Accordingly, along with lowering of system voltage VH as described with reference to Fig. 6, the quantity of the high-voltage noise intruding high-voltage detector 140 is reduced. Consequently, DC/DC converter 100 continues the operation without occurrence of the communication error in high-voltage detector 140.

### (Modified Example)

As described with reference to Fig. 6, operation of DC/DC converter 100 is continued by lowering system voltage VH at the time t1, and on the other hand, there is a possibility that the torque of motor M1 is suddenly reduced in the high-voltage system to cause a difficulty in securing an output in accordance with the command operation point of motor M1. To avoid such lowering in the output of motor M1, system voltage command value setting unit 52 can have a configuration of changing system voltage command value VHcom from predetermined voltage V1 to predetermined voltage V2 gradually.

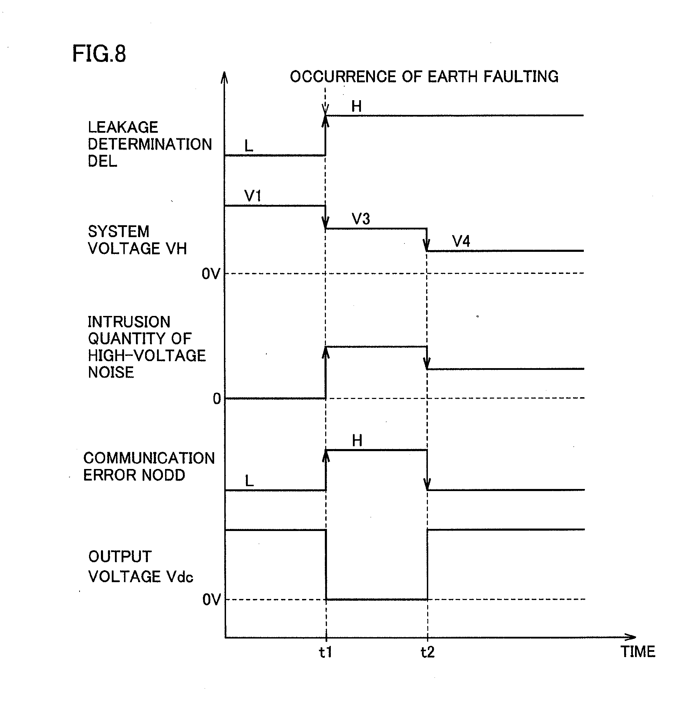

Specifically, as shown in Fig. 8, when it is determined, in accordance with signal DEL from leakage detector 60, that an earth faulting has occurred in the high-voltage system at the time t1, system voltage command value setting unit 52 in control device 50 lowers system voltage command value VHcom from predetermined voltage V1 to predetermined voltage V3. Predetermined voltage V1 up to time t1 is system voltage command value VHcom set in accordance with an operation point (rotational speed and torque) of motor M1 following the control structure described later. On the other hand, predetermined voltage V3 is a value calculated by subtracting a predetermined quantity ΔV from predetermined voltage V1. This predetermined quantity ΔV is a rate value used for a rate processing of suppressing the quantity of change in system voltage VH with respect to the time axis, and is determined based on the specification of electrically powered vehicle 5.

Further, system voltage command value setting unit 52 lowers system voltage VH from predetermined voltage V3 to predetermined voltage V4 at the time T2 posterior to the time t1. Predetermined voltage V4 is a value calculated by subtracting predetermined quantity ΔV from predetermined voltage V3.

In Fig. 8, since the quantity of the high-voltage noise is great during the times t1-t2 where the condition of system voltage VH = predetermined voltage V2 is provided, a communication error occurs in high-voltage detector 140, so that DC/DC converter 100 stops operation. Then, when system voltage command value VHcom is further lowered from predetermined voltage V2 to predetermined voltage V3 at the time t2, the quantity of the high-voltage noise is reduced, so that the communication error in high-voltage detector 140 is eliminated. Consequently, DC/DC converter 100 resumes its operation and is under operation after the time t2.

As described above, according to the power supply system in accordance with the first embodiment of the present invention, when the earth faulting has occurred in the high-voltage system, a change in the electric potential of the vehicle earth is suppressed by lowering system voltage VH Since this reduces the quantity of the high-voltage noise intruding high-voltage detector 140, occurrence of the communication noise in high-voltage detector 140 can be prevented. Consequently, in the low-voltage system, operation of DC/DC converter 100 can be continued without performing the operation stop control for DC/DC converter 100.

### [Second Embodiment]

In the first embodiment, when the earth faulting of the high-voltage system has occurred, the system voltage is lowered to suppress a change in the electric potential of the vehicle earth, so that the quantity of high-voltage noise intruding high-voltage detector 140 is reduced. In the second embodiment, the configuration of reducing the quantity of the high-voltage noise intruding high-voltage detector 140 in the DC/DC converter will be described.

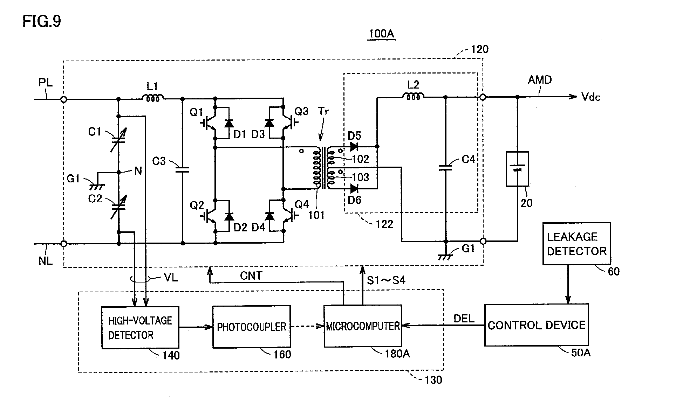

Fig. 9 represents a circuit diagram for describing a configuration of DC/DC converter 100A provided in the power supply system in accordance with the second embodiment of the present invention.

Referring to Fig. 9, a DC/DC converter 100A in accordance with the embodiment of the present invention is different as compared to DC/DC converter 100 shown in Fig. 2 in that the pair of capacitors C1, C2 constituting the Y capacitor is a variable capacitance type capacitor. Capacitors C1, C2 are variable in capacitance in accordance with a control signal from controller 130, and the capacitance between positive line PL and negative line NL and the vehicle earth (ground node G1) can be changed by changing the capacitance.

In the configuration shown in Fig. 9, when signal DEL indicating occurrence of the leakage in the high-voltage system is received from leakage detector 60, control device 50A transmits signal DEL to microcomputer 180A in controller 130A. When microcomputer 180 receives signal DEL from control device 50A, it outputs control signal CNT to capacitors C1, C2 to lower the capacitance of capacitors C1, C2.

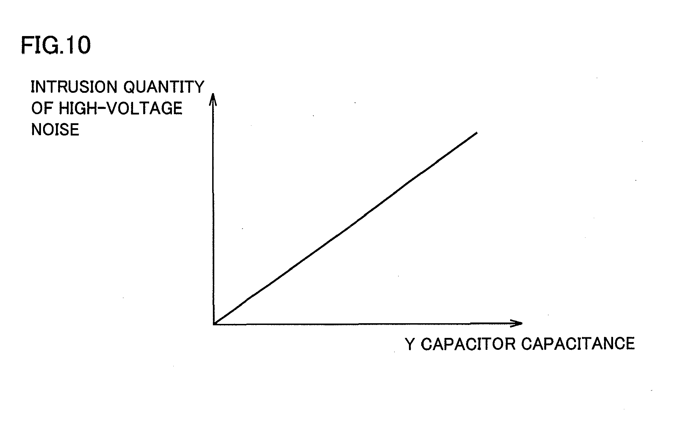

Fig. 10 represents a relationship between the capacitance of the Y capacitor and the quantity of the high-voltage noise intruding from the Y capacitor to high-voltage detector 140. The relationship shown in Fig. 10, assuming the case where the electric power cable provided between inverter 14 and motor M1 had an earth faulting, represents the quantity of the high-voltage noise intruding high-voltage detector 140 when the capacitance of the Y capacitor is changed according to the experiments and the like.

In the configuration shown in Fig. 9, the Y capacitor constitutes the LC filter together with inductor L1 and capacitor C3. The Y capacitor is designed to have a large capacitance so as to reduce the common mode voltage of a high frequency generated due to the switching operation of inverter 14. On the other hand, since the larger capacitance of the Y capacitor increases the capacity between positive line PL and negative line NL and the vehicle earth, the quantity of the high-voltage noise intruding high-voltage detector 140 increases when the earth faulting of the high-voltage system has occurred.

Therefore, when microcomputer 180 receives signal DEL from control device 50A, it reduces the quantity of the high-voltage noise intruding high-voltage detector 140 by lowering the capacitance of capacitors C1, C2 based on the relationship shown in Fig. 10. In this stage, microcomputer 180 lowers the capacitance of capacitors C1, C2 from a design value as a common mode voltage reduction filter to a value capable of suppressing the quantity of the high-voltage noise intruding into high-voltage detector 140 to be less than predetermined allowable quantity.

As described above, according to the power supply system in accordance with the second embodiment of the present invention, when the earth faulting has occurred in the high-voltage system, the quantity of the high-voltage noise intruding high-voltage detector 140 is reduced by lowering the capacitance of the Y capacitor. Accordingly, occurrence of the communication error in high-voltage detector 140 can be prevented. Consequently, in the low-voltage system, operation of DC/DC converter 100 can be continued without performing the operation stop control of DC/DC converter 100.

It should be understood that the embodiments disclosed herein are illustrative and non-restrictive in every respect. The scope of the present invention is defined by the terms of the claims, rather than the description of the embodiments set forth above, and is intended to include any modifications within the scope and meaning equivalent to the terms of the claims.

### INDUSTRIAL APPLICABILITY

The present invention can be applied to a vehicle provided with a power storage device, a driving device receiving electric power from the power storage device to generate vehicle driving power, and an auxiliary machine receiving electric power from the power storage device to operate.

### REFERENCE SIGNS LIST

5 electrically powered vehicle; 10 main battery; 12 converter; 13 voltage sensor; 14 inverter; 15 power transmission gear; 15 current sensor; 16 drive wheels; 17 current sensor; 19 rotational angle sensor; 20 auxiliary machine battery; 50, 50A control device; 52 system voltage command value setting unit; 54, 58 signal generating unit; 56 motor control voltage command value setting unit; 60 leakage detector; 100, 100A, 100B converter; 101 primary side coil; 102, 103 secondary side coil; 110 auxiliary machine load; 120 converter unit; 122 conversion circuit; 130, 130A, 130B controller; 140 high-voltage detector; 160 photocoupler; 180, 180A microcomputer; C1, C2, C3 capacitor; L1, L2 inductor; M1 motor; MNL negative bus line; MPL positive bus line; NL negative line; PL positive line.

## Claims

1. A power supply system for a vehicle including a power storage device (10), a driving device receiving electric power from said power storage device (10) to generate vehicle driving power, and an auxiliary machine (110) receiving electric power from said power storage device (10) to operate, the power supply system comprising:
a pair of capacitors (C1, C2) connected in series between terminals of said power storage device (10) and having a connection node connected to a vehicle earth;
a voltage converter (100) lowering an output voltage of said pair of capacitors (C1, C2) and supplying the voltage to said auxiliary machine (110);
a voltage detector (140) detecting the output voltage of said pair of capacitors (C1, C2);
a leakage detector (60) detecting an earth faulting of said driving device; and
a control device (50, 50A) controlling said power supply system so as to suppress a change in an electric potential of said vehicle earth when said leakage detector (60) detects an earth faulting of said driving device.

2. The power supply system for a vehicle according to claim 1, wherein said driving device includes:
an inverter (14) driving an electric motor (M1) for driving a vehicle; and
a converter (12) variably controlling a direct-current side voltage of said inverter (14), and
when said leakage detector (60) detects an earth faulting of said driving device, said control device (50) controls said converter (12) to lower the direct-current side voltage of said inverter (14) from a first value to a second value.

3. The power supply system for a vehicle according to claim 2, wherein said control device (50) includes:
a voltage command value setting unit (52) setting a voltage command value of said converter (12) in accordance with an operation state of said electric motor (M1); and
a voltage conversion controller (54) controlling a voltage conversion operation of said converter (12) so that the direct-current side voltage of said inverter (14) matches with said voltage command value, and
when said leakage detector (60) detects an earth faulting of said driving device, said voltage command value setting unit (52) lowers said voltage command value from said first value to said second value.

4. The power supply system for a vehicle according to claim 3, wherein said voltage command value setting unit (52) lowers said voltage command value from said first value to said second value gradually.

5. The power supply system for a vehicle according to claim 1, wherein each of said pair of capacitors (C1, C2) is a capacitor of a variable capacitance type, and
when an earth faulting of said driving device is detected with use of a detection value of said leakage detector (60), said control device (50A) lowers a capacitance of said pair of capacitors (C1, C2) from a first value to a second value.
